# EUROPEAN PATENT APPLICATION

(11) **EP 1 876 287 A1**
(43) Date of publication of application: **09.01.2008**
(21) Application number: 06745707.7
(22) Date of filing: 26.04.2006
(51) Int. Cl.: D06M 14/32, B60C 9/00, D06M 13/364, D06M 101/32

(54) **HEAT-RESISTANT CROSSLINKED POLYESTER FIBER AND FIBER CORD**

(30) Priority: 28.04.2005 JP 2005131374; 28.04.2005 JP 2005131375
(71) Applicant: Toyo Boseki Kabushiki Kaisha, Osaka-shi, Osaka 530-8230 (JP)
(72) Inventor: NAGAHARA, Shigenori, Ohtsu-shi Shiga 520-0292 (JP); YOSHINO, Kenji, Ohtsu-shi, Shiga 520-0292 (JP); IMAHASHI, Satoshi, Ohtsu-shi, Shiga 520-0292 (JP); TAKAHASHI, Noriko, Ohtsu-shi, Shiga 520-0292 (JP)
(74) Representative: Müller-Boré & Partner Patentanwälte
(86) International application number: PCT/JP2006/308729
(87) International publication number: WO 2006/118143

(57) **Abstract**

[Object] To prepare a polyester fiber and fiber cord having an excellent heat resistance which does not generate thermal melting at high temperature while properties such as dimensional stability, high strength and durability are maintained. To provide a material which is useful as a belt for tire and a carcass material.

[Means to Solve] A polyester fiber and fiber cord comprising a copolymerized polyester is impregnated with a compound having at least two unsaturated bonds, and is irradiated with electronic ray or γ-ray, whereby the compound causes a cross-linking reaction in the inner area and surface layer of the polyester fiber and fiber cord, which results in a fiber and fiber cord having an excellent heat resistance.

## Description

### Technical Field of the Invention

The present invention relates to a heat-resistant cross-linking polyester fiber and fiber cord. More particularly, the present invention provides a heat-resistant cross-linking polyester fiber and fiber cord having dimensional stability, high strength, durability, etc., being excellent in heat-resistance and being useful as the use for industrial materials such as tire cord, belt material, canvas and screen gauze.

### Background Art

Organic fibers such as Nylon fiber, rayon fiber and polyester fiber have been used already for tire cord as fiber-reinforcing materials for tire. When Nylon fiber is used for tire cord, although it has a high tenacity and a good adhesive property to rubber, its elongation is relatively big whereby its dimensional stability is inferior and there is a disadvantage that a flat spot phenomenon is apt to happen. Further, when rayon fiber is used for a tire cord, its strength is low as compared with the above Nylon fiber tire cord whereby, when it is used for a carcass material for tire, the amount is to be increased and there is a disadvantage that weight of the tire increases. Furthermore, there is an uncertainty in future for the supply of pulp which is a material for rayon fiber. Accordingly, as a material for supplementing the disadvantages of those fibers, the use of polyester fiber having an excellent dimensional stability and a high strength has been receiving public attention.

Still further, in recent years, there has been an increasing need for a run-flat tire in view of improvement in the safety of cars. A run-flat tire is such a tire which is able to run for some distances within a predetermined speed even when the tire is punctured during driving at a high speed and the inner pressure of the tire becomes 0 KPa. With regard to the run-flat tire, a side-reinforced type where relatively hard rubber layers having a crescent-shaped cross section are aligned in the inner surface of the carcass from a bead part of a tire side wall to a shoulder area to reinforce and a core type where cyclic cores made of metal or synthetic resin are attached to the area of rim in a pneumatic chamber of the tire have been known.

In the side-reinforced type between the two, when a tire is punctured during running and air is deflated, load is supported by rigidity intrinsic to the side wall reinforced with a reinforced rubber layer whereby running for a predetermined distance is still possible. But in the case of a tire where flexure is big with a high load, frictional heat by contact to the road is generated and inner temperature of the tire becomes not lower than 200°C and sometimes becomes very high temperature than above locally. As such, the main cause for the trouble in tire is the deterioration by heat generation and, therefore, particularly in the case of run-flat tire, a rayon fiber, an aramid fiber having heat resistance and steel, etc. are used as carcass materials.

On the other hand, when Nylon fiber and polyester fiber are used as a carcass material for run-flat tires, breakage at the adhesion interface to tire rubber starts due to generation of heat of about 200°C and, in addition, strength and dimensional stability quickly lower. Further, when heat generation of higher than 200°C happens, it is higher than melting points of Nylon fiber and polyester fiber whereby thermal melting takes place and there is a problem that the fibers are not able to retain the role as a reinforcing material. Accordingly, their use is restricted or they are not suitable for the use not only as a carcass material for run-flat tires but also as belt and other textile cord where heat resistance is required.

Polyester fiber comprising a copolymerized polyethylene terephthalate is less expensive as compared with rayon fiber and, if a function of heat resistance is added thereto, that is commercially advantageous. Moreover, when endowment of heat resistance is also applied to Nylon fiber and polyethylene naphthalate fiber comprising a copolymerized polyethylene naphthalate similarly, their use expands and that is useful.

When a polyester fiber is used for tire cord, water molecules produced by a neutralization reaction of an amine compound in rubber with carboxy terminal group attack the ester bond of the polyester whereby hydrolysis takes place which leads to deterioration. In order to solve such a problem, various proposals have been done in the stage of polyester fiber.
Thus, there have been various proposals for solving the problems of polyester fiber. For example, a method where a polymer comprising acrylic acid and/or methacrylic acid is endowed (Patent Document 1), a method where an epoxy compound or a specific diepoxy compound is contained in a polyester to reduce the amount of carboxy group terminal of the polyester (Patent Documents 2 to 4) and a method where a compound of a carbodiimide type is contained in a polyester to reduce the amount of carboxy group terminal have been disclosed (Patent Documents 5 to 9). Those methods are effective as the means for reducing the hydrolysis by attacking an ester bond of the polyester by water molecules produced by a neutralization reaction of an amine compound in rubber with carboxyl terminal group but it does not solve the insufficient heat resistance inherent to the polyester.

With regard to a method for preventing the deterioration of a carcass material in rubber, there are disclosures for a method where, after cording, it is protected by a dipping treatment method (Patent Documents 1.0 to 12). However, any of them merely prevents and protects the fiber surface from the invasion of an amine compound and inner structure is not improved whereby the expected effect is little.

There are further disclosures for polyester fiber cords comprising a copolymerized polyester where dimensional stability, durability and thermal characteristic are available and a method for manufacturing the same (Patent Documents 13 to 17).

However, although they relate to tire cords achieving an object by satisfying specific conditions, any of them does not result in significant improvement and, in addition, the above-mentioned heat resistance is unable to be achieved.

In view of the above, there are disclosures for a method of cording where an oriented and crystallized drawn yarn prepared by a specific manufacturing condition of polyester fiber (Patent Document 18) and a method of manufacturing a cross-linked polyester fiber where thread immediately after a melt spinning of polyester is dipped into a cross-linking agent and electronic ray is irradiated together with drawing (Patent Document 19). According to the latter method, it is mentioned that prevention of melting by tobacco is able to be improved when the thread immediately after melt spinning of polyester is dipped into a cross-linking agent and electronic ray is irradiated with drawing to make into a cross-linked polyester fiber. However, those methods do not solve the phenomenon of thermal melting at the temperature of higher than the melting point of polyester and the heat resistance at the temperature of higher than 250°C is not endowed thereby.

Fibers comprising a copolymerized polyester having excellent dimensional stability, high strength, durability, etc. used for carcass materials and belt materials are manufactured by a known method in the field of the art and, as examples of the particularly preferred methods, the methods mentioned in Patent Documents 20 and 21 are listed.

Patent Document 1: Japanese Patent Laid-Open No. 55/166,235 A
Patent Document 2: Japanese Patent Laid-Open No. 54/6,051 A
Patent Document 3: Japanese Patent Laid-Open No. 7/166,419 A
Patent Document 4: Japanese Patent Laid-Open No. 7/166,420 A
Patent Document 5: Japanese Patent Laid-Open No. 58/23,916 A
Patent Document 6: Japanese Patent Laid-Open No. 5/163,612 A
Patent Document 7: Japanese Patent Laid-Open No. 10/168,661 A
Patent Document 8: Japanese Patent Laid-Open No. 10/168,655 A
Patent Document 9: Japanese Patent Laid-Open No. 2003/193,331 A
Patent Document 10: Japanese Patent Laid-Open No. 2/99,667 A
Patent Document 11: Japanese Patent Laid-Open No. 2/127, 562 A
Patent Document 12: Japanese Patent Laid-Open No. 3/59,168 A
Patent Document 13: Japanese Patent Laid-Open No. 2001/115,354 A
Patent Document 14: Japanese Patent Laid-Open No. 5/71,033 A
Patent Document 15: Japanese Patent Laid-Open No. 5/59,627 A
Patent Document 16: Japanese Patent Laid-Open No. 11/241,281 A
Patent Document 17: Japanese Patent Laid-Open No. 2000/96,370 A
Patent Document 18: Japanese Patent Laid-Open No. 7/118, 920 A
Patent Document 19: Japanese Patent Laid-Open No. 6/248,521 A
Patent Document 20: Japanese Patent Laid-Open No. 58/98,419 A
Patent Document 21: Japanese Patent Laid-Open No. 59/168,119 A

### Brief Description of the Drawings

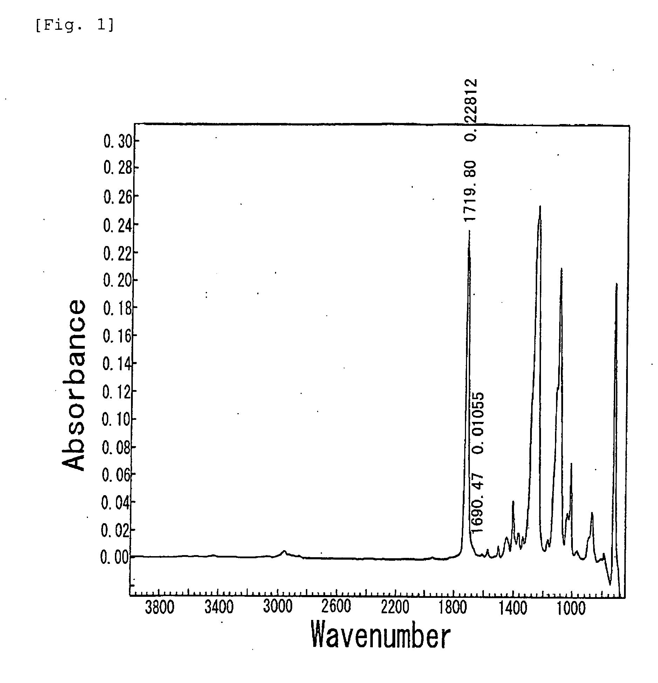

Fig. 1 shows IR spectral data of the surface of the polyester fiber before an impregnating treatment used in Examples 1 to 7 and Comparative Example 1.

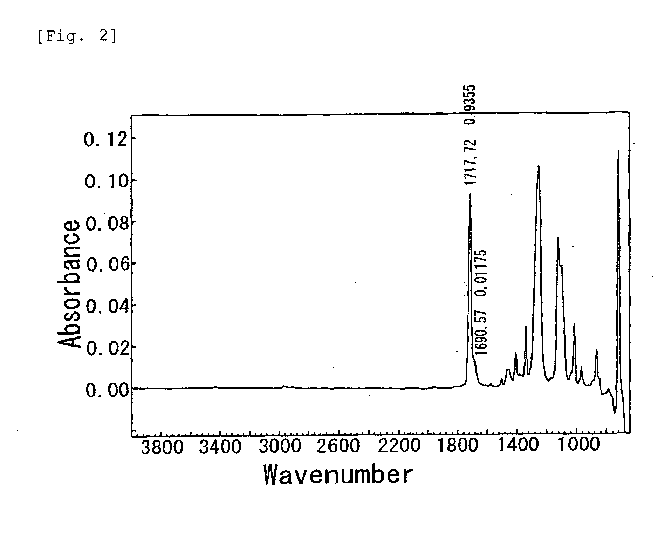

Fig. 2 shows IR spectral data of the surface of the heat-resistant cross-linking polyester fiber prepared in Example 1.

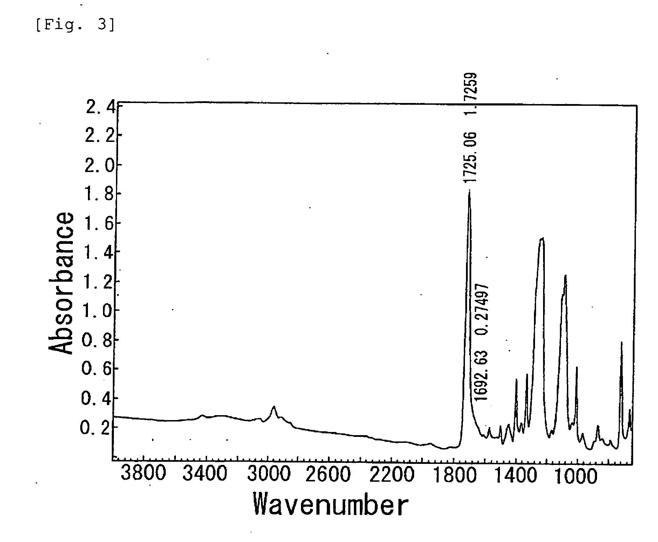

Fig. 3 shows IR spectral data of inner area of the heat-resistant cross-linking polyester fiber prepared in Example 1.

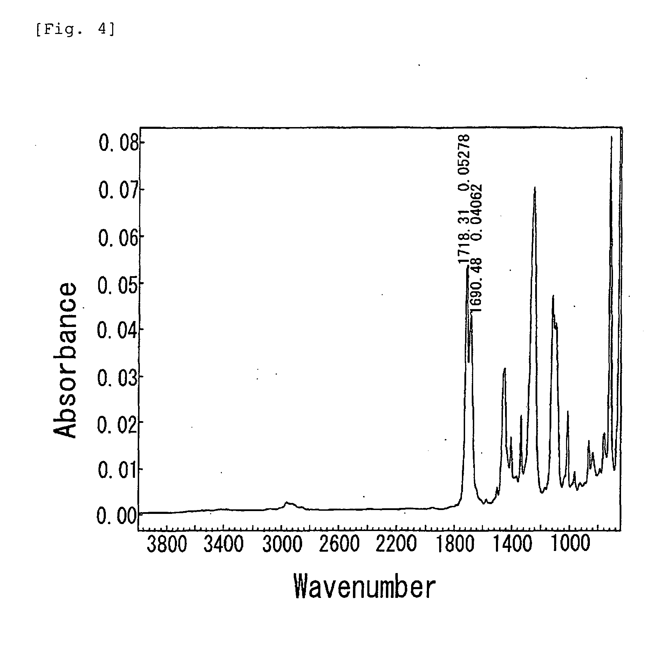

Fig. 4 shows IR spectral data of the surface of the heat-resistant cross-linking polyester fiber prepared in Example 2.

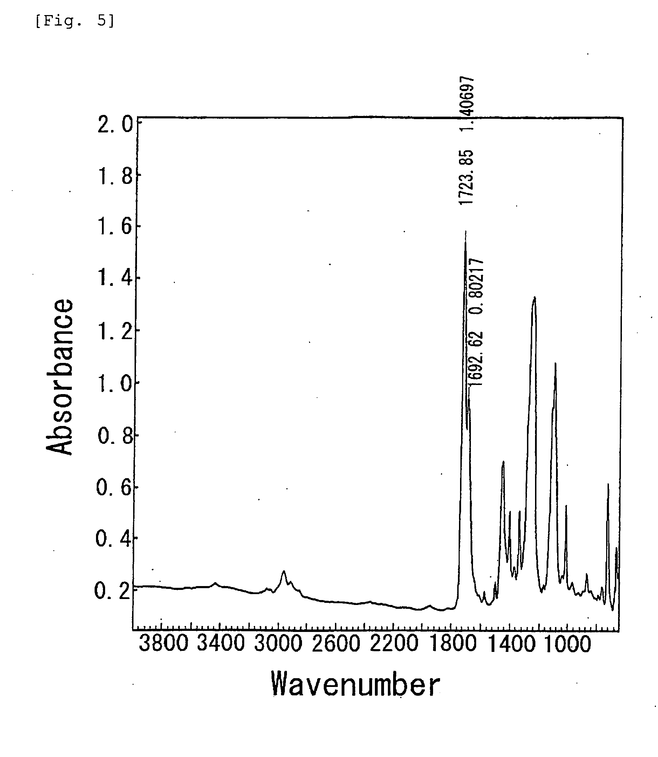

Fig. 5 shows IR spectral data of the inner area of the heat-resistant cross-linking polyester fiber prepared in Example 2.
Fig. 6 is a dynamic viscoelasticity of a heat-resistant cross-linking polyester fiber prepared in Example 1.
Fig. 7 is a dynamic viscoelasticity of the polyester of

### Comparative Example 1.

### Disclosure of the Invention

### Problems that the Invention is to Solve

An object of the present invention is to prepare a polyester fiber and fiber cord having an excellent heat resistance which retain the shape without generation of thermal melting where a heat resistance at the temperature of higher than a melting point which is an aim in the polyester fiber is endowed while excellent dimensional stability, high strength and durability of polyester fiber comprising a copolymerized polyester are still maintained.

### Means for Solving the Problems

As a result of intensive studies, the present inventors have found that the above-mentioned object is achieved when (1) non-drawn polyester yarn and/or drawn polyester yarn prepared by melt spinning of polymer comprising a copolymerized polyester are/is impregnated with a compound having at least two unsaturated bonds and are/is irradiated with active ray to prepare a heat-resistant cross-linking polyester fiber; (2) the fiber prepared in (1) is twisted to prepare a fiber cord; (3) a polyester fiber cord comprising a copolymerized polyester is impregnated with a compound having at least two unsaturated bonds and is irradiated with active ray to prepare a heat-resistant cross-linking fiber cord; and (4) the polyester fiber and/or the polyester fiber cord prepared by a melt spinning of polymer comprising a copolymerized polyester are/is previously treated with a carrier agent, impregnated with a compound having at least two unsaturated bonds and irradiated with active ray to prepare fiber and fiber cord whereupon the present invention has been achieved.

Thus, the present invention is able to be achieved by the followings.
1. A heat-resistant cross-linking polyester fiber which is characterized in that said fiber is prepared by such a manner that, after non-drawn polyester yarn and/or drawn polyester yarn prepared by melt spinning of a copolymerized polyester are/is impregnated with a compound having at least two unsaturated bonds in a molecule, they/it are/is irradiated with active ray.
2. The heat-resistant cross-linking polyester fiber according to the above 1, wherein the surface of the resulting polyester fiber has a layer of a compound having at least two unsaturated bonds in a molecule and thickness of said layer is at least 1 µm.
3. The heat-resistant cross-linking polyester fiber according to the above 1 or 2, wherein the absorbance ratio of the absorbance of the compound to the absorbance of the polyester determined from an IR spectrum of the polyester fiber is
   not less than 0.1 in the surface layer of the polyester fiber and
   not less than 0.1 in the inner area of the polyester fiber.
4. The heat-resistant cross-linking polyester fiber according to any of the above 1 to 3, wherein said fiber is prepared in such a manner that, after non-drawn polyester yarn and/or drawn polyester yarn comprising a copolymerized polyester are/is treated with a carrier agent, they/it are/is impregnated with a compound having at least two unsaturated bonds in a molecule and are/is irradiated with active ray.
5. The heat-resistant cross-linking polyester fiber according to any of the above 1 to 4, wherein the active ray is electronic ray or γ-ray.
6. A heat-resistant cross-linking polyester fiber cord which is characterized in being prepared by making the heat-resistant cross-linking polyester fiber manufactured in any of the above 1 to 5 into a fiber cord.
7. A heat-resistant cross-linking polyester fiber cord which is characterized in that said cord is prepared by such a manner that, after a polyester fiber cord comprising a copolymerized polyester is impregnated with a compound having at least two unsaturated bonds in a molecule, it is irradiated with active ray.
8. The heat-resistant cross-linking polyester fiber cord according to the above 7, wherein said cord is prepared by such a manner that, after a polyester fiber cord comprising a copolymerized polyester is previously treated with a carrier agent, it is impregnated with a compound having at least two unsaturated bonds in a molecule and is irradiated with active ray.
9. The heat-resistant cross-linking polyester fiber cord according to any of the above 6 to 8, wherein surface of the polyester fiber cord has a layer of a compound having at least two unsaturated bonds in a molecule and thickness of the layer is at least 1 µm.
10. The heat-resistant cross-linking polyester fiber cord according to any of the above 6 to 9, wherein the absorbance ratio of the absorbance of the compound to the absorbance of the polyester determined from an IR spectrum of the polyester fiber cord is
   not less than 0.1 in the surface layer of the polyester fiber and
   not less than 0.1 in the inner area of the polyester fiber.
11. The heat-resistant cross-linking polyester fiber cord according to any of the above 6 to 10, wherein the active ray is electronic ray or γ-ray.
12. A pneumatic radial tire in which the heat-resistant cross-linking polyester fiber cord mentioned in any of the above 6 to 11 is used as a carcass material.

### Advantages of the Invention

In the heat-resistant cross-linking polyester fiber and fiber cord in accordance with the present invention, a polyester fiber or fiber cord comprising a copolymerized polyester is subjected to an impregnating treatment with a compound having at least two unsaturated bonds in a molecule and then irradiated with electronic ray, γ-ray, etc. whereby thermal melting of the polyester fiber at the melting temperature is able to be suppressed due to formation of cross-linking structure by a cross-linking reaction of the compound existing on the surface layer of the polyester fiber and/or by a cross-linking reaction of the compound permeated into inner area and, further and at the same time, by a cross-linking reaction of the compound existing on the surface layer with the compound permeated into inner area.

As a result thereof, it is a characteristic feature that the shape is able to be retained without generation of thermal melting. Further surprising fact is that, even at the temperature of as high as 300°C or higher, the shape is able to be retained without thermal melting. Thus, the product of present invention is useful as a carcass material for run-flat tire which has been difficult to use because of insufficient heat resistance and, in addition, its application to endowment of heat resistance to fibers other than those comprising a copolymerized polyester such as Nylon fiber is now possible as well.

### Best Mode for Carrying Out the Invention

The present invention will now be illustrated in detail as follows.
The present invention provides a heat-resistant cross-linking polyester fiber and cord having an improved heat resistance where its shape is able to be retained causing no thermal melting at high temperature or, particularly, at higher temperature than melting point of the copolymerized polyester or, preferably, at not lower than 265°C, more preferably at not lower than 280°c or, still more preferably, at not lower than 300°C.

The copolymerized polyester or, particularly, the aromatic copolymerized polyester according to the present invention is a polycondensate of an aromatic dicarboxylic acid component with a diol component and there is no particular limitation therefor including the known ones. Examples of the aromatic dicarboxylic acid component are terephthalic acid, isophthalic acid, 2,6-naphthalenedicarboxylic acid, 2,7-naphthalenedicarboxylic acid, 1,5-naphthalenedicarboxylic acid, diphenyldicarboxylic acid, diphenyl ether dicarboxylic acid and 5-sodium sulfophthalate. Among them, terephthalic acid and 2,6-napthalenedicarboxylic acid are preferred. Examples of the diol component are an aliphatic diol such as ethylene glycol, diethylene glycol, triethylene glycol, trimethylene glycol, tetramethylene glycol, propylene glycol, octamethylene glycol, decamethylene glycol and polyethylene glycol; an alicyclic diol such as cyclohexanediol and cyclohexanedimethanol; and an aromatic diol such as naphthalenediol, bisphenol A and resorcinol. Among them, an aliphatic diol such as ethylene glycol and trimethylene glycol is preferred. With regard to the aromatic polyester of the present invention, it may be constituted from each one aromatic dicarboxylic acid component and diol component or it may be a copolymerized polyester comprising three or more members thereof. It is also possible to be a product where two or more aromatic polyester resins are blended.

The above-mentioned copolymerized polyester may further contain a small amount of other optional polymer and an additive such as antioxidant, radical scavenger, electrostatic agent, improving agent for dyeing, dye, pigment, delustering agent, fluorescent whitener and inactive fine particles. With regard to a method for the manufacture of the aromatic polyester, there is no need of adopting any special polymerizing condition but the polyester may be synthesized by any method which is adopted in the production of polyester by polycondensation of a reaction product of an aromatic dicarboxylic acid component and/or an ester-formed derivative thereof with a diol component. A device for the polymerization may be that of a batch system or a continuous system. It is also possible that the polyester prepared in the above liquid-phase polycondensation step is granulated to preliminarily crystallize followed by subjecting to a solid-phase polymerization in an atmosphere of inert gas or *in vacuo* at the temperature of lower than the melting point.

With regard to a catalyst for the polymerization, there is no particular limitation so far as it has a desired catalytic activity and antimony compound, titanium compound, germanium compound and aluminum compound are preferably used. When the catalyst as such is used, one of them may be used solely or two or more may be used jointly. The using amount thereof is preferred to be from 0.002 to 0.1 molar % to the aromatic carboxylic acid component constituting the polyester.

An intrinsic viscosity (IV) of the copolymerized polyester in the present invention is preferably not less than 0.6 and, more preferably, not less than 0.8. When the IV is less than 0.6, the aimed strength and elastic modulus are unable to be achieved. The amount of the carboxy terminal group of the aromatic polyester is preferably not more than 50 eq/ton and, more preferably, not more than 30 eq/ton. When it is more than 50 eq/ton, durability is deteriorated by generation of hydrolysis by an amine compound permeated from the rubber when the polyester is used as a polyester tire cord, and that is not preferable.

In the present invention, it is also possible to adopt a method where the above-mentioned copolymerized polyester is made into a thread by a common melt spinning condition and the pulled-out thread is once rolled up to prepare a non-drawn yarn or subjected to a thermal drawing by a spin drawing method where drawing is conducted in continuation to the spinning to prepare a drawn yarn. Generally, thermal drawing is carried out in a one-stage drawing at high multiplication or in a multi-stage drawing of two or more stages. With regard to a heating method, there are methods by over-heated roll, over-heated steam, heat plate, heat box, etc. and there is no particular limitation therefor.
In the polyester fibers as such, those having excellent dimensional stability, high strength and durability manufactured for the use as industrial materials such as a reinforcing material for rubber products including tire are preferably used.

In the present invention, the non-drawn yarn and/or drawn yarn of the copolymerized polyester fiber prepared as such are/is impregnated with a compound having at least two unsaturated bonds in a molecule whereupon a polyester fiber in which the compound is present on the surface or in the inner area of the polyester fiber is manufactured by a batch system or continuously.

In the present invention, it is also possible to prepare a heat-resistant cross-linking fiber cord by the following method. Thus, there are (1) a method where the above-prepared polyester fiber is irradiated with active ray to prepare a heat-resistant cross-linking polyester fiber and, after that, it is made into cord by a ring twisting machine or a direct twisting machine and (2) a method where a cord prepared by a ring twisting machine or a direct twisting machine using a polyester fiber is impregnated with a compound having at least two unsaturated bonds so that the compound is made to be present on the surface and the inner area of the polyester fiber and then active ray is irradiated to prepare a heat-resistant cross-linking polyester fiber cord and the manufacture is carried out by a batch system or continuously.

In the present invention, a greige cord is able to be prepared by a common method using a ring twisting machine or a direct twisting machine. The greige cord by the common method is subjected to 10 to 100 twists per 10 cm (ply twisting), plural twisted yarns are combined and they are subjected to 10 to 100 twists per 10 cm (cable twisting) in a reverse direction to prepare the cord.

The compound having at least two unsaturated bonds in a molecule used in the present invention is a compound which is able to conduct a radical polymerization reaction by being irradiated with electronic ray or γ-ray and is a compound having two or more unsaturated groups such as acryloyl group, methacryloyl group, itaconoyl group, maleinoyl group, fumaroyl group, crotoyl group, acryloylamino group, methacryloylamino group, cinnamoyl group, vinyl group, allyl group and styryl group in a molecule and a derivative thereof. More particularly, a compound having cyanuric acid or isocyanurate ring and a derivative thereof are listed. Examples thereof are triallyl isocyanurate, triallyl cyanurate, diallyl methyl isocyanurate, diallyl ethyl isocyanurate, dially decyl isocyanurate, diallyl dodecyl isocyanurate, diallyl myristyl isocyanurate, diallyl cetyl isocyanurate, diallyl stearyl isocyanurate, ethyl bisdiallyl isocyanurate, tetramethylenebisdiallyl isocyanurate, hexamethylenebisdiallyl isocyanurate, decamethylenebisdiallyl isocyanurate, oxydiethylbisdiallyl isocyanurate, dioxytriethylenebisdiallyl isocyanurate, diallyl methyl cyanurate, diallyl ethyl cyanurate, diallyl decyl cyanurate, xylenebisdiallyl isocyanurate, 1,3-diallyl-5-(2,3-epoxypropan-1-yl)-1,3,5-triazine-2,4,6(1 H,3H,5H)-trione and tris(2-hydroxyethyl) isocyanurate triacrylate. Any compound may be used without particular limitation so far as it is a compound having cyanuric acid or isocyanurate ring and a compound where a derivative thereof has an unsaturated group. Particularly preferred ones are triallyl isocyanurate, 1,3-diallyl-5-(2,3-epoxypropan-1-yl)-1,3,5-triazine-2,4,6(1H,3H,5H)-trione, tris(2-hydroxyethyl) isocyanurate triacrylate, etc. If necessary, two or more thereof may be mixed.

With regard to the preferred viscosity of the compound used in the present invention, it is able to be used provided that within a range of 5 to 150 mPa.s at ambient temperature (25°C) although it is also possible to heat to such an extent that the compound is not volatized. Further, it is preferably recommended that warming is conducted up to near the glass transition point of the aromatic copolymerized polyester so that the compound is positively permeated into the inner area of the polyester fiber and fiber cord.

Although there is no particular limitation for the condition of impregnation of the above-mentioned compound into the polyester fiber and fiber cord, it is preferred for permeation of the compound into the inner area of the polyester fiber and fiber cord to dip into a heating bath vessel of 30 to 100°C for about 3 to 15 minutes. When a low-viscosity compound at ambient temperature (25°C) is used, it is able to be permeated into the inner area within about 3 to 5 minutes. With regard to the compound stuck to the polyester fiber and fiber cord, those other than the necessary amount are removed by any roller, guider bar, etc. Thickness of the surface layer of the polyester fiber and fiber cord after cross-linking hardening is preferably not less than 1 µm and, more preferably, not less than 4 µm. When thickness of the surface layer is less than 1 µm, the cross-linking density lacks and heat resistance becomes insufficient whereby that is not advantageous.

The presence of the compound contained in the inner area of the polyester fiber and fiber cord prepared as such is able to be confirmed by an absorbance ratio calculated from the absorbance of the polyester and the absorbance of the compound determined by the IR spectrum using an IR spectral analysis measuring method. When the absorbance ratio is not less than 0.1, a sufficient amount of the compound is present and a sufficient cross-linking property is surely achieved. When it is less than 0.1, no sufficient cross-linking property is available whereby a heat resistance is insufficient and that is not preferred. Usually, not less than 50% of amorphous part is present not only in the non-drawn yarn but also in the drawn yarn and, therefore, it is the most preferred impregnation method that the compound positively permeates into this amorphous part.

In the present invention, it is preferably recommended to use a carrier agent for further improvement of permeability of the compound. To be more specific, examples of the carrier agent are 1,2,4-trichlorobenzene, o-dichlorobenzene, o-phenylphenol, diphenyl, methylnaphthalene, butyl benzoate, dimethyl terephthalate and methyl salicylate. The carrier agent as such is preferred to use for the treatment in a preceding step for impregnation of the compound. With regard to the treatment with a carrier agent, a treatment by a dipping treatment and a treatment by a spraying method are preferred and, in the case of a spraying treatment, it is preferred to treat by heating at about 100°C.

In the present invention, the use of a carrier agent is preferably recommended for further improving the permeability especially when the compound is impregnated into a greige cord prepared by twisting a polyester fiber. In the piled part resulted by twisting of the polyester fiber, permeation of the compound is apt to become insufficient and, as a result, there is a risk that heat resistance is insufficient due to insufficient cross-linking caused by insufficient permeability of the compound. Although there is a method where the impregnating time is made longer or the heating is positively conducted, that is not preferred in an industrial viewpoint.

In order to prepare the heat-resistant cross-linking polyester fiber and fiber cord of the present invention, an impregnating treatment with the compound is conducted and irradiation with active ray such as ultraviolet ray, electronic ray or γ-ray etc. is conducted whereby a radical reaction is started to conduct cross-linking and, among the active ray, that where permeation of irradiation energy is particularly high such as electronic ray an γ-ray is preferably used. In the present invention, the irradiation energy of the active ray is preferably 50 to 10,000 KGy and, more preferably, 100 to 6,000 KGy. When energy of the irradiated amount is less than 50 KGy, the cross-linking reaction does not proceed sufficiently while, when it is more than 10,000 KGy, decomposition of the polyester proceeds whereby there is a risk of lowering of the strength and that is not preferred. When the irradiating amount is too much, the layer of the compound becomes fragile resulting in the interface peeling and that is not preferred.

### Examples

Now the present invention will be specifically illustrated by way of the following Examples although the present invention is not limited thereto. In the meanwhile, various measuring instruments and measuring methods are shown below.
(1) Irradiation of Electronic Ray
Measuring instrument
Irradiating device: Electrocurtain Labo device
Accelerating voltage: 165 KV
Electron flow: 5 mA
Measuring method
A sample prepared by a dipping treatment was set on a tray and irradiated with electronic ray. Incidentally, the electronic ray was uniformly irradiated on the surface and the back and irradiated dose was the sum of them.
(2) Dynamic Viscoelasticity
Measuring instrument
Device: Rheogel-E4000 manufactured by K. K. UBM
Measuring conditions:

| | |
|---|---|
| Frequency | 11 Hz |
| Initiating temperature | 30°C |
| Step temperature | 2°C |
| Final temperature | 300°C |
| Rising rate | 5°C/min |

Sample: 5 mm width and 15 mm length
Measuring method
After the sample was set in the measuring instrument, measurement was conducted under the above measuring conditions. It was observed by naked eye whether the shape was retained upon finishing the measurement.
(3) Linkam Test
Measuring instrument
Device: Cooling and heating device for microscope "TH 600" (manufactured by Linkam)
Set temperature: 300°C
Measuring method
A sample to be evaluated was placed on a slide glass and a melting state of the sample was checked by naked eye.
(4) Absorbance Ratio
Measuring instrument
FT-IR analytical device: FTS 7000 manufactured by Digilab
ATR attachment: Thunderdome (IRE: Ge) manufactured by Thermo Spectra-Tech
Detector: DTGS; resolving power: 8 cm⁻¹ ; integrated time: 128 times
Infrared microscope: UMA 600 manufactured by Digilab
Measuring method
The surface layer of the sample and the inner area after removal of the surface layer were taken out, made into film by applying the pressure and placed on a Kbr plate and the IR spectra were measured by a microtransmission method.
From each of the resulting spectra, the ratio of the absorbance at 1690 cm⁻¹ (absorption by isocyanurate ring) to the absorbance at 1720 cm⁻¹ (ester bond of PET) was calculated by the following formula.
Absorbance Ratio = (Absorbance at 1690 cm⁻¹) / (Absorbance at 1720 cm⁻¹)
Incidentally, each absorbance was defined as the height from the valley near 1880 cm⁻¹ and the height from the base line at 1640 cm⁻¹, respectively.
(5) Intrinsic Viscosity
The polymer was dissolved in a 3/1 mixed solvent of p-chlorophenol/tetrachloroethane at the concentration of 0.4 g/dl and measured at 30°C.
(6) Fineness
In accordance with the definition of JIS-L 1017, fineness was measured after being allowed to stand for 24 hours in a chamber where temperature and humidity were controlled at 20°C and 65% RH.
(7) Tenacity and elongation
In accordance with the definition of JIS-L 1017, tenacity, breaking elongation and intermediate elongation were measured using a tensile tester after being allowed to stand for 24 hours in a chamber where temperature and humidity were controlled at 20°C and 65% RH.
(8) Thickness of Surface Layer
Measurement was conducted using a thickness measuring device.
Thickness of the surface layer was defined as the value obtained by deducting the thickness of the polyester fiber before impregnation from the thickness of the polyester fiber which was impregnated and cross-linked.

### (Example 1)

Polyethylene terephthalate chip of 0.95 intrinsic viscosity (IV) was discharged from a spinning nozzle of 336 pore numbers at a spinning temperature of 310°C together with adjusting the discharging amount so as to make the fineness 1,440 dtex and cooled and solidified in a spinning tube with a cooling air of 70°C and 1.0 m/sec. Thread prepared thereby was pulled out at a spinning speed of 3,400 m/min and then subjected to a drawing treatment with a drawing rate of 1. 6-fold so as to make the tenacity 6.9 cN/dtex and the intermediate elongation 5.5% whereupon a polyester fiber was prepared. The resulting polyester fiber was dipped for 5 minutes in a bath vessel comprising triallyl isocyanurate (viscosity: 80 to 110 mPa.s) at room temperature and squeezed with rollers and necessary amount of the resulting polyester fiber impregnated with triallyl isocyanurate was placed in a tray and irradiated with electronic ray where electron energy was 6,000 KGy. The resulting polyester fiber cross-linked with electronic ray was used for the measurement by each of the measuring methods.
After that, two of the resulting polyester fibers were twisted and the resulting greige cord of 1,440 dtex/2 where twisted numbers were 43 × 43 (t/10 cm) was subjected to the measurement by each of the measuring methods.

### (Example 2)

A treatment was conducted by the same method as in Example 1 except that a dipping time using triallyl isocyanurate was made 4 days to prepare a polyester fiber. The resulting polyester fiber cross-linked with electronic ray was subjected to the measurement by each of the measuring methods.

### (Example 3)

The same treatment as in Example 1 was conducted except that a bath vessel temperature comprising triallyl isocyanurate was heated at 70°C to prepare a polyester fiber. The resulting polyester fiber cross-linked with electronic ray was measured by each of the measuring methods.
After that, a greige cord was prepared by the same method as in Example 1 and measured by each of the measuring methods.

### (Example 4)

The same treatment as in Example 1 was conducted except that a bath vessel comprising 1,3-diallyl-5-(2,3-epoxypropan-1-yl)-1,3,5-triazine-2,4,6(1 H,3H,5H)-trione (product name: diallyl monoglycidyl isocyanuric acid) was heated at 70°C to prepare a polyester fiber. The resulting polyester fiber cross-linked with electronic ray was measured by each of the measuring methods.
After that, a greige cord was prepared by the same method as in Example 1 and measured by each of the measuring methods.

### (Example 5)

The same treatment as in Example 1 was conducted except that a bath vessel comprising tris(2-hydroxyethyl) isocyanurate triacrylate was heated at 30°C to prepare a polyester fiber. The resulting polyester fiber cross-linked with electronic ray was measured by each of the measuring methods.
After that, a greige cord was prepared by the same method as in Example 1 and measured by each of the measuring methods.

### (Example 6)

The polyester fiber used in Example 1 was dipped for 5 minutes in a chlorobenzene-type carrier agent previously heated at 100°C and then treated by the same method as in Example 3 to prepare a polyester fiber. The resulting polyester.fiber cross-linked with electronic ray was measured by each of the measuring methods.

### (Example 7)

A greige cord of 1,440 dtex/2 where twisted numbers were 43 x 43 (t/10 cm) by twisting two polyester fibers used in Example 1 was dipped for 5 minutes in a chlorobenzene-type carrier agent previously heated at 100°C, then dipped for 5 minutes in triallyl isocyanurate in a hot bath vessel of 70°C and irradiated with electronic ray of 6,000 KGy electron energy. The resulting polyester fiber cord cross-linked with electronic ray was measured by each of the measuring methods.

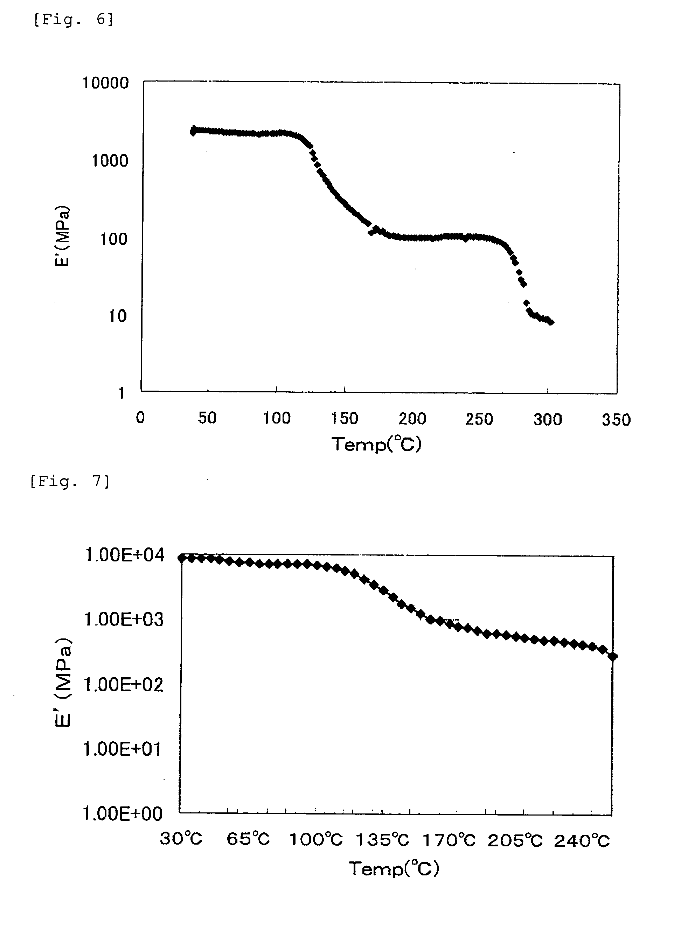

As will be apparent from Table 1 and Fig. 6, the polyester fibers and fiber cords prepared in Examples 1 to 7 were not melted by heat even at the temperature of as high as 300°C but retain their shape and were polyester fibers and fiber cords having an excellent heat-resistance.

### (Comparative Example 1)

The polyester fiber used in Example 1 was measured for fibrous state without impregnating treatment of the compound and without cross-linking with electronic ray.
After that, two of the polyester fiber were twisted and the resulting greige cord of 1,440 dtex/2 where twisted numbers were 43 × 43 (t/10 cm) was subjected to the measurement by each of the measuring methods.

As shown in Table 1 and Fig. 7, the polyester fiber and fiber cord were melted by heat at the melting point (255°C) of the polyester and did not retain the shape.

**[Table 1]**

| | | | Example 1 | Example 2 | Example 3 | Example 4 | Example 5 | Example 6 | Example 7 | Comparative Example 1 |
|---|---|---|---|---|---|---|---|---|---|---|
| fiber | type | | PET | PET | PET | PET | PET | PET | PET | PET |
| | strength | N | 99 | - | 99 | 99 | 99 | - | 99 | 99 |
| | tenacity | cN/dtex | 6.9 | 6.9 | 6.9 | 6.9 | 6.9 | 6.9 | 6.9 | 6.9 |
| | intermediate elongation | % | 5.5 | - | 5.5 | 5.5 | 5.5 | - | 5.5 | 5.5 |
| | breaking elongation | % | 10.4 | 10.4 | 10.4 | 10.4 | 10.4 | 10.4 | 10.4 | 10.4 |
| impregnation condition | carrier agent A | | absent | absent | absent | absent | absent | present | present | - |
| | compound | | TAIC | TAIC | TAIC | DA-MGIC | THEIC | TAIC | TAIC | - |
| | temperature | °C | ambient temperature | ambient temperature | 70 | 70 | 30 | 70 | 70 | - |
| | time | | 5 minutes | 4 days | 5 minutes | 5 minutes | 5 minutes | 5 minutes | 5 minutes | - |
| property of cross-linking fiber | thickness of surface layer | µ m | 20 | 75 | 10 | 5 | 15 | 12 | 12 | - |
| | absorbance ratio | surface | 0.12 | 0.71 | 0.15 | 0.15 | 0.12 | 0.20 | - | - |
| | | inner area | 0.11 | 0.68 | 0.18 | 0.20 | 0.13 | 0.23 | - | - |
| | tenacity | cN/dtex | 7.5 | 8.2 | 8.3 | 7.9 | 8.6 | 7.5 | - | - |
| | breaking elongation | % | 8.5 | 7.8 | 9.5 | 8.3 | 7.0 | 9.0 | - | - |
| heat resistance of cross-linking fiber (300°C) greige yarn used for cord | dynamic viscoelasticity E' | Mpa | retaining | retaining | retaining | retaining | retaining | retaining | - | thermal melting |
| | shape | presence or absence of thermal melting | absent | absent | absent | absent | absent | absent | - | present |
| | type | | cross-linking fiber | - | cross-linking fiber | cross-linking fiber | cross-linking fiber | - | non-cross-linking | non-cross-linking |
| property of cord heat resistance of cord (300°C) | strength | N | 195 | - | 190 | 185 | 198 | - | 180 | 175 |
| | intermediate elongation | % | 5.0 | - | 5.0 | 6.5 | 5.0 | - | 6.0 | 6.5 |
| | breaking elongation | % | 12.5 | - | 13.5 | 15.5 | 10.5 | - | 16.0 | 17.3 |
| | thickness of surface layer | µm | 20 | - | 10 | 5 | 15 | - | 12 | - |
| | absorbance ratio | surface | 0.12 | - | 0.15 | 0.15 | 0.12 | - | 0.20 | - |
| | | inner area | 0.11 | - | 0.18 | 0.20 | 0.1.3 | - | 0.24 | - |
| | Linkam test | presence or absence of thermal melting | absent | - | absent | absent | absent | - | absent | present |

| | | | | | | | | | | |
|---|---|---|---|---|---|---|---|---|---|---|
| carrier agent A: chlorobenzene-type TAIC: triallyl isocyanurate DA-MGIC: diallyl monoglycidyl isocyanuric acid THIEC: tris(2-hydroxyethyl) isocyanurate triacrylate | | | | | | | | | | |

### Industrial Applicability

A method of the present invention where a fiber is subjected to an impregnating treatment with a compound having at least two unsaturated bonds and to a cross-linking reaction by irradiating with active ray is able to be utilized to not only fibers comprising a copolymerized polyester but also other natural fibers and organic fibers. Besides the above, it is also expected to be utilized in other fields such as a field of films and a field of engineering plastics where heat resistance, dimensional stability, etc. are demanded.

## Claims

1. A heat-resistant cross-linking polyester fiber which is **characterized in that** said fiber is prepared by such a manner that, after non-drawn polyester yarn and/or drawn polyester yarn prepared by melt spinning of a copolymerized polyester are/is impregnated with a compound having at least two unsaturated bonds in a molecule, they/it are/is irradiated with active ray.

2. The heat-resistant cross-linking polyester fiber according to claim 1, wherein the surface of the resulting polyester fiber has a layer of a compound having at least two unsaturated bonds in a molecule and thickness of said layer is at least 1 µm.

3. The heat-resistant cross-linking polyester fiber according to claim 1 or 2, wherein the absorbance ratio of the absorbance of the compound to the absorbance of the polyester determined from an IR spectrum of the polyester fiber is
not less than 0.1 in the surface layer of the polyester fiber and
not less than 0.1 in the inner area of the polyester fiber.

4. The heat-resistant cross-linking polyester fiber according to any of claims 1 to 3, wherein said fiber is prepared in such a manner that, after non-drawn polyester yarn and/or drawn polyester yarn comprising a copolymerized polyester are/is treated with a carrier agent, they/it are/is impregnated with a compound having at least two unsaturated bonds in a molecule and are/is irradiated with active ray.

5. The heat-resistant cross-linking polyester fiber according to any of claims 1 to 4, wherein the active ray is electronic ray or γ-ray.

6. A heat-resistant cross-linking polyester fiber cord which is **characterized in** being prepared by making the heat-resistant cross-linking polyester fiber manufactured in any of claims 1 to 5 into a fiber cord.

7. A heat-resistant cross-linking polyester fiber cord which is **characterized in that** said cord is prepared by such a manner that, after a polyester fiber cord comprising a copolymerized polyester is impregnated with a compound having at least two unsaturated bonds in a molecule, it is irradiated with active ray.

8. The heat-resistant cross-linking polyester fiber cord according to claim 7, wherein said cord is prepared by such a manner that, after a polyester fiber cord comprising a copolymerized polyester is previously treated with a carrier agent, it is impregnated with a compound having at least two unsaturated bonds in a molecule and is irradiated with active ray.

9. The heat-resistant cross-linking polyester fiber cord according to any of claims 6 to 8, wherein surface of the polyester fiber cord has a layer of a compound having at least two unsaturated bonds in a molecule and thickness of the layer is at least 1 µm.

10. The heat-resistant cross-linking polyester fiber cord according to any of claims 6 to 9, wherein the absorbance ratio of the absorbance of the compound to the absorbance of the polyester determined from an IR spectrum of the polyester fiber cord is
not less than 0.1 in the surface layer of the polyester fiber and
not less than 0.1 in the inner area of the polyester fiber.

11. The heat-resistant cross-linking polyester fiber cord according to any of claims 6 to 10, wherein the active ray is electronic ray or γ-ray.

12. A pneumatic radial tire in which the heat-resistant cross-linking polyester fiber cord mentioned in any of claims 6 to 11 is used as a carcass material.
